# EUROPÄISCHE PATENTSCHRIFT

(11) **EP 3 513 261 B1**
(45) Veröffentlichungstag und Bekanntmachung des Hinweises auf die Patenterteilung: **21.10.2020**
(21) Anmeldenummer: 17790939.7
(22) Anmeldetag: 11.09.2017
(51) Int. Cl.: G05B 19/409, G05B 19/416, B23Q 1/00

(54) **STEUERVORRICHTUNG ZUM BETREIBEN EINER WERKZEUGMASCHINE, INSBESONDERE EINER FRÄS- ODER DREHMASCHINE, SOWIE ENTSPRECHENDE WERKZEUGMASCHINE**
CONTROL DEVICE FOR OPERATING A MACHINE TOOL, IN PARTICULAR A MILLING MACHINE OR LATHE, AND CORRESPONDING MACHINE TOOL
DISPOSITIF DE COMMANDE PERMETTANT DE FAIRE FONCTIONNER UNE MACHINE-OUTIL, EN PARTICULIER UNE FRAISEUSE OU UN TOUR, ET MACHINE-OUTIL CORRESPONDANTE

(30) Priorität: 14.09.2016 AT 508252016
(43) Veröffentlichungstag der Anmeldung: 24.07.2019
(73) Patentinhaber: KEBA AG, 4041 Linz (AT)
(72) Erfinder: HACKL, Benjamin, 4020 Linz (AT); WIMMER, Philipp, 4693 Desselbrunn (AT)
(74) Vertreter: Burger, Hannes
(86) Internationale Anmeldenummer: PCT/AT2017/060225
(87) Internationale Veröffentlichungsnummer: WO 2018/049450

(56) Entgegenhaltungen:
- DE-A1- 4 423 307
- DE-A1-102014 200 066
- DE-T2- 69 807 853
- US-A1- 2008 234 855
- ANONYMOUS: "SINUMERIK - SINUMERIK 840D sl / 828D - Bedienkomponenten und Vernetzung", PRIOR ART PUBLISHING, 4. Mai 2016 (2016-05-04), XP040673176,
- ANONYMOUS: "SINUMERIK - SINUMERIK 840D sl / 828D - Erweiterungsfunktionen", IP.COM JOURNAL, IP.COM INC., WEST HENRIETTA, NY, US, 26. September 2011 (2011-09-26), XP013145093, ISSN: 1533-0001

## Beschreibung

Die Erfindung betrifft eine Steuervorrichtung zum Betreiben einer Werkzeugmaschine, insbesondere einer Fräs- oder Drehmaschine, mit einem motorisch verfahr- und positionierbaren Werkzeugkopf, sowie eine Werkzeugmaschine mit einer entsprechenden Steuervorrichtung, wie dies in den Ansprüchen 1 und 14 angegeben ist.

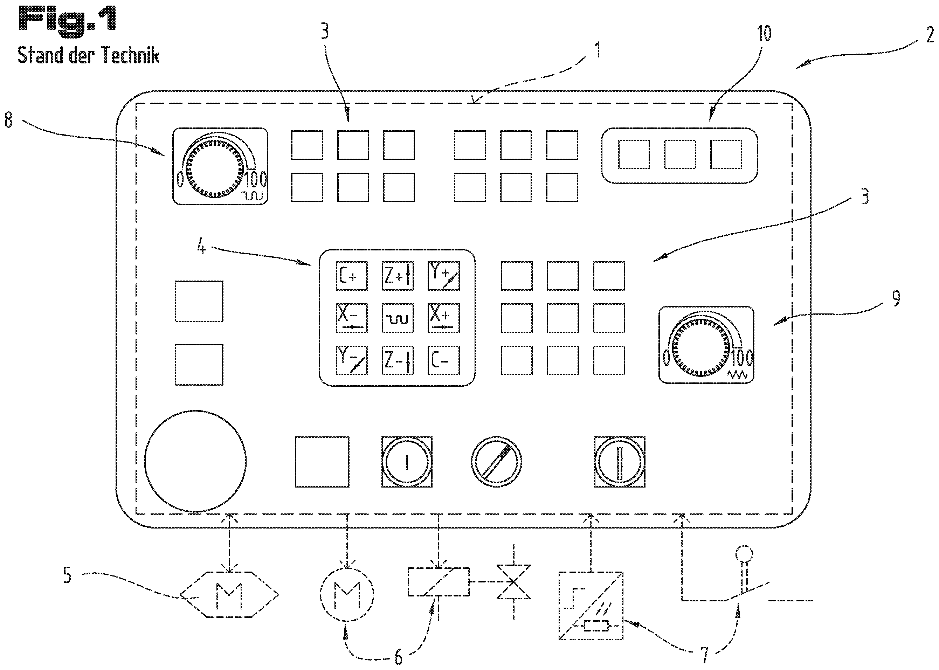

Aus dem Stand der Technik sind Werkzeugmaschinen, insbesondere Fräsmaschinen bzw. Drehmaschinen bekannt, welche mittels wenigstens einer elektronischen Steuervorrichtung in ihren Bewegungsabläufen vollautomatisch, teilautomatisch und/oder manuell steuerbar sind. Dabei sind an den entsprechenden Maschinen Bedienpanels ausgeführt, welche einer Bedienperson einen Eingriff in die Steuerungs- bzw. Bewegungsabläufe der Werkzeugmaschine ermöglichen. Diese Bedienpanels weisen typischerweise eine Mehrzahl von Anzeige- und Eingabeelementen auf, um die jeweiligen Betriebszustände durch eine Bedienperson überwachen zu können bzw. um manuelle, steuerungstechnische Eingriffe vornehmen zu können. Solche Bedienpanels sind insbesondere zur Überwachung und Bedienung und/oder Programmierung vorgesehen. Entsprechend einer bekannten Ausführungsform, wie sie auch in Fig. 1 dargestellt ist, sind separate Bedienelemente bzw. Potentiometer vorgesehen, wobei mit dem ersten Bedienelement die Vorschubgeschwindigkeit des Werkzeugkopfes manuell eingestellt bzw. justiert werden kann und mit dem zweiten Bedienelement bzw. Potentiometer die sogenannte Eilgangeschwindigkeit des Werkzeugkopfes eingestellt bzw. manuell justiert werden kann. Die mit einem derartigen Bedienpanel zur Verfügung stehenden Bedienungsabläufe sind nur bedingt zufriedenstellend.

Das Gerätehandbuch "SINUMERIK 840D sl" der Siemens AG ("SINUMERIK 840D sl Bedienkomponenten und Vernetzung", 03/2016) beschreibt im Abschnitt 3 des Teils "Bedienhandgeräte" ein "Mini-Bedienhandgerät" zum Einrichten und Bedienen an einfachen Maschinen im JobShop-Bereich. Demnach soll das Bedienkonzept durch eine Abstufung von Grob-, Mittel- und Feinzustellung eine schnelle, inkrementgenaue Positionierung ermöglichen. Als Bedienelemente sind an dem Mini-Bedienhandgerät neben einem Handrad auch ein Zustimmt aster, ein Achswahlschalter für fünf Achsen als auch ein Eilgangtaster für schnelles Verfahren mit Verfahrtasten oder Handrad vorgesehen. Dabei können mit dem Handrad Fahrbewegungen an der mit dem Achswahlschalter angewählten Achse ausgelöst werden. Der Eilgangtaster ist dazu vorgesehen, die Verfahrgeschwindigkeit der mit dem Achswahlschalter angewählten Achse erhöhen zu können. Dabei wirkt der Eilgangtaster sowohl auf Verfahrbefehle der Verfahrtasten als auch auf die Handradsignale.

Aufgabe der vorliegenden Erfindung war es, die Nachteile des Standes der Technik zu überwinden und eine Steuervorrichtung bzw. eine Werkzeugmaschine zur Verfügung zu stellen, welche einer Bedienperson eine verbesserte Bedienung der Werkzeugmaschine ermöglicht.

Diese Aufgabe wird durch eine Steuervorrichtung sowie durch eine Werkzeugmaschine gemäß den Ansprüchen gelöst.

Die erfindungsgemäße Steuervorrichtung bzw. Werkzeugmaschine bietet den Vorteil, dass eine Bedienperson besonders komfortabel die jeweils gewünschten bzw. zweckmäßigen Bewegungsgeschwindigkeiten im Zuge der Bearbeitungsphasen und auch im Zuge der Eilgangphasen eines laufenden Steuer- bzw. Bearbeitungsprogrammes (CNC-Programm) einstellen kann. Dabei kann die Bedienperson die Hand auf dem multifunktionalen Bedienelement belassen, während einerseits Bewegungsgeschwindigkeiten des Werkzeugkopfes im Zuge der Bearbeitungsphasen und andererseits Bewegungsgeschwindigkeiten des Werkzeugkopfes im Zuge der Eilgangphasen eingestellt bzw. manuell vorgegeben werden können. Insbesondere ist dadurch ein ständiges Umgreifen der Bedienperson zwischen zwei Bedienelementen, wie sie aus dem Stand der Technik bekannt sind, erübrigt.

Dies wird in erfindungsgemäßer Art und Weise durch Implementierung eines endlos verdrehbaren Drehsteller-Bedienelementes erzielt. Nachdem ein derartiges Drehsteller-Bedienelement mit einem endlos rotierbaren Betätigungsorgan keine fix vordefinierten Endanschläge aufweist, ist ein problemloser, steuerungstechnischer Wechsel zwischen dem ersten Verwendungszustand (Bearbeitungsphase) und dem zweiten Verwendungszustand (Eilgangphase) des Drehsteller-Bedienelementes ermöglicht.

Ein besonderer Effekt der erfindungsgemäßen Maßnahmen liegt auch darin, dass die Bedienperson ihren Blick bzw. ihren Fokus - und letztendlich ihre Konzentration - verstärkt auf den Werkzeugkopf richten kann und so präzisere aber auch raschere Bedienhandlungen erzielt werden können. Zudem kann dadurch die potentielle Gefahr in Bezug auf Schäden an der Maschine, am Werkstück, oder am Werkzeug hintangehalten werden. Neben einem erhöhten Bedienkomfort für die Bedienperson wird dadurch also auch eine höhere Wirtschaftlichkeit, eine raschere Bedienbarkeit und eine möglichst präzise Erzielung der gewünschten Einstellungen bzw. Ergebnisse erreicht.

Gegebenenfalls kann durch das zentrale bzw. multifunktionale Bedienelement auch eine verbesserte Wirtschaftlichkeit erzielt werden. Unter anderem können dadurch die Kosten hinsichtlich Herstellung, Logistik, Montage und dergleichen reduziert werden. Derartige Einsparungen gehen dabei in vorteilhafter Art und Weise nicht zulasten der Funktionalität, sondern kann durch die anspruchsgemäßen Maßnahmen die Bedienungsergonomie sogar gesteigert werden. Letztendlich kann auch eine hohe Benutzerakzeptanz in Zusammenhang mit einer erfindungsgemäß umgesetzten Steuervorrichtung bzw. Werkzeugmaschine erzielt werden.

Vorteilhaft sind auch die Maßnahmen gemäß Anspruch 2, da dadurch eine steuerungstechnisch relativ zuverlässige Auswertung der via das Drehsteller-Bedienelement abgegebenen bzw. eingeleiteten Steuerbefehle ermöglicht ist. Darüber hinaus ist dadurch eine endlose Rotier- bzw. Verdrehbarkeit des Betätigungsorganes ermöglicht.

Von Vorteil sind auch die Maßnahmen gemäß Anspruch 3. Dadurch besteht die Möglichkeit einer sequentiellen Abarbeitung des Steuerprogrammes, insbesondere eines CNC-Bearbeitungsprogrammes, wobei zeitlich versetzt entweder die Geschwindigkeitseinstellung der Vorschubgeschwindigkeit oder die Geschwindigkeitseinstellung der Eilganggeschwindigkeit auf den Produktionsprozess wirkt. Insbesondere ist dadurch ein komfortabel und rasch durchführbarer Testlauf im Hinblick auf ein vorliegendes CNC-Bearbeitungsprogramm mit einer vordefinierten Bewegungsbahn des Werkzeugkopfes ermöglicht.

Durch die Maßnahmen gemäß Anspruch 4 kann die Betriebsweise der Steuervorrichtung und die Arbeitsweise der Werkzeugmaschine den jeweiligen Bedürfnissen bzw. Erfordernissen einfach angepasst werden.

Von Vorteil ist auch eine Maßnahme gemäß Anspruch 5 und/oder 6, da dadurch eine gute Interaktion zwischen der Bedienperson und der Steuervorrichtung der Werkzeugmaschine ermöglicht ist. Insbesondere können dadurch vorliegende CNC-Bearbeitungsprogramme bzw. Steuerprogramme besonders rasch und komfortabel getestet werden bzw. ist dadurch das jeweilige Steuer- bzw. Bearbeitungsprogramm durch eine Bedienperson besonders einfach und komfortabel evaluierbar.

Zweckmäßig sind auch die Maßnahmen gemäß Anspruch 7 und/oder 8, da dadurch ein sogenannter "Handradmodus" zur Verfügung steht, welcher eine präzise Positionierung des Werkzeugkopfes mittels dem Drehsteller-Bedienelement ermöglicht. Die Funktionalität bzw. der Funktionsumfang des Drehsteller-Bedienelementes kann dadurch weiter gesteigert werden, wodurch auch die Wirtschaftlichkeit der entsprechenden Steuervorrichtung begünstigt werden kann. Darüber hinaus ist die entsprechende Bedienungshandlung besonders intuitiv, da sie mit der Bewegung eines Schraubendrehers vergleichbar ist.

Vorteilhaft sind auch die Maßnahmen gemäß Anspruch 9, da dadurch die Benutzerfreundlichkeit bzw. Bedienungsergonomie weiter gesteigert werden kann. Insbesondere kann dadurch der Bedienperson ein haptisches Feedback hinsichtlich der jeweiligen Maschinenzustände bzw. Betriebszustände gegeben werden. Dieser haptische Feedback-Kanal ausgehend von der Steuervorrichtung in Richtung zur Bedienperson begünstigt dabei eine möglichst fehlerfreie und präzise Bedienung einer entsprechenden Werkzeugmaschine. Dies unter anderem deshalb, weil durch Ausnutzung des taktilen Wahrnehmungsvermögens einer Bedienperson die Kontrollierbarkeit des Gesamtsystems verbessert werden kann.

Zweckmäßig sind auch die Maßnahmen gemäß Anspruch 10, da dadurch einer Bedienperson haptisch signalisiert wird, dass relativ hohe Bewegungsgeschwindigkeiten vorliegen bzw. eingeleitet wurden. Zudem kann dadurch ein unbewusstes "Übersteuern" hintangehalten werden. Dies ist beispielsweise dann von erhöhter Zweckmäßigkeit, wenn die Bewegungsrichtung des Werkzeugkopfes parallel oder annähernd parallel zur Blickrichtung der Bedienperson verläuft und es dadurch für eine Bedienperson vergleichsweise schwer zu erkennen ist, wie hoch die aktuell vorliegende Bewegungsgeschwindigkeit des Werkzeugkopfes tatsächlich ist.

Praktikabel sind auch die Maßnahmen gemäß Anspruch 11, da dadurch der Bedienperson eindeutig signalisiert werden kann, wenn Maximalwerte bzw. Endbereiche erreicht sind. Durch die gesteuerte bzw. steuerbare Anpassbarkeit des Drehsteller-Bedienelementes hinsichtlich dieser Endanschläge, kann das Drehsteller-Bedienelement für eine Mehrzahl von unterschiedlichen Maschinenfunktionen mit jeweils unterschiedlichen Grenzwerten mehrfach genutzt werden. Dabei kann die entsprechende Anpassung via die Steuervorrichtung vorteilhafterweise automatisiert erfolgen.

Auch durch die Maßnahmen gemäß Anspruch 12 kann die Benutzerfreundlichkeit der Steuervorrichtung verbessert werden. Insbesondere können dadurch allfällige Irritationen der Bedienperson aufgrund beabsichtigter, letztendlich jedoch nicht ausgeführter bzw. technisch nicht ausführbarer Bewegungsabläufe hintangehalten werden.

Zweckmäßig ist auch eine Ausführungsform gemäß Anspruch 13, da dadurch das taktile Wahrnehmungsvermögen einer Bedienperson genutzt wird, um die jeweils gewünschten bzw. benötigten Einstellungen möglichst rasch und zugleich fehlervermeidend auffinden bzw. einnehmen zu können.

Die Aufgabe der Erfindung wird auch durch eine Werkzeugmaschine gemäß Anspruch 14 gelöst. Die damit erzielbaren vorteilhaften Wirkungen und technischen Effekte sind der vorstehenden Beschreibung und den nachfolgenden Ausführungen zu entnehmen.

Zum besseren Verständnis der Erfindung wird diese anhand der nachfolgenden Figuren näher erläutert.

Es zeigen jeweils in stark vereinfachter, schematischer und beispielhafter Darstellung:
- Fig. 1: eine Bedienerschnittstelle einer Werkzeugmaschine gemäß dem Stand der Technik;
- Fig. 2: eine verbesserte Bedienerschnittstelle und Steuervorrichtung für eine Werkzeugmaschine.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

In Fig. 1 ist eine Steuervorrichtung 1 bzw. eine Bedienerschnittstelle 2 einer Werkzeugmaschine entsprechend dem Stand der Technik gezeigt. Die Steuervorrichtung 1 kann dabei Bestandteil der Bedienerschnittstelle 2 bzw. eines sogenannten Bedienpanels der Werkzeugmaschine sein. Alternativ kann die Steuervorrichtung 1 in Bezug auf die Bedienerschnittstelle 2 auch örtlich distanziert angeordnet sein. Zudem ist eine verteilte Anordnung von einzelnen Steuervorrichtungen 1 möglich, wie dies in vielfältigen Ausführungsformen aus dem Stand der Technik bekannt ist. Die jeweiligen Steuervorrichtungen 1 stehen dabei in signal- bzw. datentechnischer Verbindung, typischerweise via Kabel- bzw. Busverbindungen, um die jeweiligen Steuer- bzw. Betriebsabläufe und Bedienhandlungen zu ermöglichen.

Die entsprechende Bedienerschnittstelle 2 der Werkzeugmaschine, insbesondere einer sogenannten CNC-Maschine, wie zum Beispiel einer Fräsmaschine oder einer Drehmaschine, ermöglicht eine manuell steuerbare Beeinflussung der Betriebsabläufe der Werkzeugmaschine. Hierzu können eine Mehrzahl von Schaltelementen 3, welche als Tast-Schaltelemente bzw. als Drucktasten ausgeführt sein können, vorgesehen sein.

Zur manuell steuerbaren Bewegung bzw. Positionierung von Maschinenachsen, insbesondere eines Werkzeugkopfes 5 der Werkzeugmaschine, sind typischerweise eine Mehrzahl von Verfahrtasten 4 vorgesehen.

Die entsprechende Steuervorrichtung 1 ermöglicht so einen kontrollierten Betrieb der Werkzeugmaschine, insbesondere eine kontrollierte motorische Verstellung und Positionierung des Werkzeugkopfes 5 der Werkzeugmaschine. Wie an sich bekannt, können an die Steuervorrichtung 1 eine Mehrzahl von verschiedenen Aktoren 6 und Sensoren 7 bzw. Gebern angebunden sein, um automatisierte bzw. teilautomatisierte Bewegungsabläufe bzw. Betriebsabläufe der Werkzeugmaschine bewerkstelligen zu können.

Zudem können vielfältige Ausführungsformen von diversen Sicherheits- bzw. Not-Abschaltelementen, Schlüsselschaltern, Leuchtdrucktasten und dergleichen an der Bedienerschnittstelle 2 vorgesehen sein.

Bekannte Steuervorrichtungen 1 bzw. Bedienerschnittstellen 2 von Werkzeugmaschinen umfassen ein erstes Potentiometer 8 zur manuellen Einstellung bzw. Vorgabe der Vorschubgeschwindigkeit des Werkzeugkopfes 5. Zusätzlich ist ein zweites Potentiometer 9 ausgebildet, welches zur manuellen Einstellung bzw. Vorgabe einer Eilganggeschwindigkeit des Werkzeugkopfes 5 vorgesehen ist. Das erste und das zweite Potentiometer 8, 9 weisen dabei begrenzte Verdrehwinkel auf. Insbesondere ist bei diesen Potentiometern 8, 9 jeweils eine Minimalstellung (0) und eine Maximalstellung (100) definiert.

Zur Vorgabe der Schnittgeschwindigkeit, insbesondere der Drehzahl des Werkzeuges bzw. des Werkstücks, insbesondere zur Auswahl der Spindeldrehzahl, sind Auswahltasten 10 an der Bedienerschnittstelle 2 zugreifbar bzw. betätigbar.

Bei der Steuervorrichtung 1 bzw. der Bedienerschnittstelle 2 nach dem Stand der Technik erfolgt also eine manuelle Vorgabe der Vorschubgeschwindigkeit des Werkzeugkopfes 5 über das erste Potentiometer 8, und eine manuelle Vorgabe der Eilganggeschwindigkeit des Werkzeugkopfes 5 via das zweite Potentiometer 9. Eine Bewegung des Werkzeugkopfes 5 erfolgt dabei entweder mit Vorschubgeschwindigkeit - wenn das Werkzeug des Werkzeugkopfes 5 mit dem Werkstück in Eingriff steht bzw. in Eingriff stehen könnte -, oder mit Eilganggeschwindigkeit, wenn das Werkzeug nicht mit dem Werkstück in Eingriff steht. Insbesondere bei Leerfahrten des Werkzeugkopfes 5 bzw. bei Rückstellbewegungen und dergleichen liegt Eilganggeschwindigkeit vor bzw. ist Eilganggeschwindigkeit verfügbar. Dieser Betriebszustand der Werkzeugmaschine kann als Eilgangphase bezeichnet werden. Der Betriebszustand in welchem die Werkzeugmaschine mittels dem Werkzeugkopf 5 eine Bearbeitung eines Werkstückes ausführt, kann als Bearbeitungsphase bezeichnet werden.

Für die Vorgabe von Vorschubgeschwindigkeit und Eilganggeschwindigkeit sind also bei bekannten Steuervorrichtungen 1 zwei baulich eigenständige Potentiometer 8, 9 vorgesehen, welche zueinander beabstandet angeordnet und von einer Bedienperson selektiv zu betätigen sind. Die Vorschubgeschwindigkeit ist dabei über das erste Potentiometer 8 manuell vorgebbar bzw. einstellbar, während die Eilganggeschwindigkeit über das zweite Potentiometer 9 vorgebbar bzw. einstellbar ist.

Bei einer in der Praxis üblichen Vorgangsweise wird im Zuge eines Tests eines neuen CNC-Programmes bzw. Steuerprogrammes so vorgegangen, dass während eines Bearbeitungsschrittes bzw. während einer Bearbeitungsphase gegenüber dem Werkstück das zweite Potentiometer 9 (Eilgang-Potentiometer 9) auf Null gestellt wird, und während einer Eilgangbewegung bzw. Eilgangphase das erste Potentiometer 8 (Vorschub-Potentiometer 8) auf Null gestellt wird, während das jeweils andere Potentiometer 8 bzw. 9 von der Bedienperson auf einen gewünschten Wert der Geschwindigkeit eingestellt wird. Die Einstellung der jeweiligen Geschwindigkeit erfolgt dabei meist unter Beobachtung der Maschine und des Schnittbildes des Werkzeuges. Insbesondere erfolgen die wechselweisen Geschwindigkeitsvorgaben unter der Kontrolle bzw. Aufsicht einer Bedienperson - teilweise basierend auf den jeweiligen Erkenntnissen und Erfahrungen der Bedienperson.

Neben dieser manuellen Beeinflussungsmöglichkeit der Betriebsabläufe bzw. Bewegungsabläufe des Werkzeugkopfes 5 umfasst die Steuervorrichtung 1 auch ein Steuerprogramm, welches in einer Speichervorrichtung der Steuervorrichtung 1 hinterlegt ist bzw. hinterlegbar ist. Die Steuervorrichtung 1 ist dabei zur Abarbeitung dieses zumindest teilweise frei programmierbaren Steuerprogramms eingerichtet und werden die Betriebsabläufe der Werkzeugmaschine unter anderem durch dieses Steuerprogramm bestimmt oder zumindest mitbestimmt.

Die bekannte Bedienerschnittstelle 2 einer Werkzeugmaschine weist somit zwei Potentiometer bzw. Bedienelemente 8, 9 zur manuell steuerbaren Veränderung der Bewegungsgeschwindigkeiten des Werkzeugkopfes 5 auf. Zudem ist zumindest ein Bedienelement, beispielsweise eine Mehrzahl Verfahrtasten 5, zum Positionieren des Werkezugkopfes 5, insbesondere zur manuell steuerbaren Veränderung von Bewegungen bzw. Positionen des Werkzeugkopfes 5 vorgesehen.

Die mit einer derartigen Steuervorrichtung 1 gemäß dem Stand der Technik erzielbaren Betriebsabläufe sind nur bedingt zufriedenstellend.

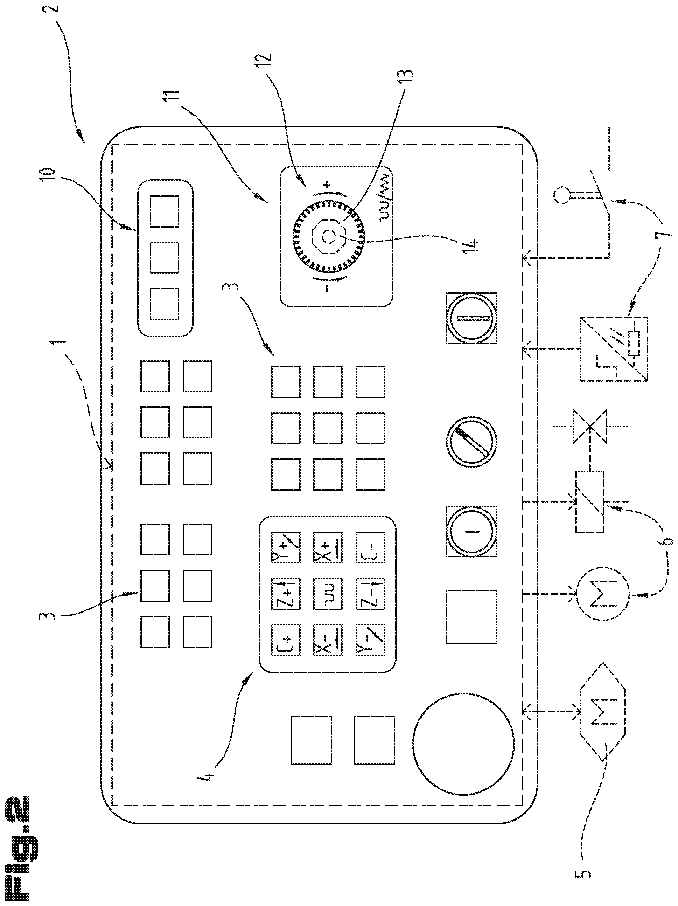

Fig. 2 zeigt eine beispielhafte Ausführungsform einer erfindungsgemäß ausgeführten Steuervorrichtung 1 bzw. einer erfindungsgemäß umgesetzten Bedienerschnittstelle 2.

Hierbei umfasst die Bedienerschnittstelle 2 ein einziges Bedienelement 11, welches sowohl zur manuellen Einstellung der Vorschubgeschwindigkeit des Werkzeugkopfes 5, als auch zur manuellen Einstellung der Eilganggeschwindigkeit des Werkzeugkopfes 5 eingerichtet ist. Insbesondere ist dabei ein mehrfunktional ausgebildetes Bedienelement 11 vorgesehen, welches einerseits - in einem ersten Verwendungszustand - zur manuellen Einstellung bzw. Vorgabe einer Vorschubgeschwindigkeit im Zuge einer Bearbeitungsphase des Werkzeugkopfes 5 eingerichtet ist und andererseits - in einem zweiten Verwendungszustand - zur manuellen Einstellung bzw. Vorgabe einer Eilganggeschwindigkeit im Zuge einer Eilgangphase des Werkzeugkopfes 5 eingerichtet ist. Demnach ist ein multifunktionales, gemeinsames (zentrales) Bedienelement 11 vorgesehen, welches abwechselnd zur manuellen Einstellung der Vorschubgeschwindigkeit im Zuge einer Bearbeitungsphase des Werkzeugkopfes 5, und zur manuellen Einstellung der Eilganggeschwindigkeit im Zuge einer Eilgangphase des Werkzeugkopfes 5 eingerichtet ist. Die jeweiligen Verwendungszustände des zentralen Bedienelementes 11 sind dabei vorzugsweise wechselweise bzw. zeitlich aufeinanderfolgend gegeben und können von der Steuervorrichtung 1 bestimmt oder mitbestimmt sein.

Das mehrfunktionale, wechselweise nutzbare Bedienelement 11 ist dabei nicht als anschlagbehaftetes Potentiometer ausgebildet, sondern als anschlaglos verdrehbares Bedienelement 11 ausgeführt. Insbesondere ist das mehrfunktional ausgeführte Bedienelement 11 als Drehsteller-Bedienelement 12 mit einem endlos verdrehbaren Betätigungsorgan 13 ausgebildet. Dadurch können Wechsel zwischen dem ersten Verwendungszustand und dem zweiten Verwendungszustand - und umgekehrt - problemlos bewerkstelligt werden. Diese Wechsel zwischen dem ersten und dem zweiten Verwendungszustand des Drehsteller-Bedienelementes 12 werden vorzugsweise durch die Steuervorrichtung 1 initiiert bzw. durch deren Steuerprogramm automatisch ausgelöst. Eine gesonderte Bedienhandlung seitens der Bedienperson für einen Wechsel zwischen dem ersten und dem zweiten Verwendungszustand des Bedienelementes 11, insbesondere des Drehsteller-Bedienelementes 12, ist vor allem während dem Vorliegen eines Evaluierungsmodus der Steuervorrichtung 1 nicht erforderlich.

Entsprechend einer zweckmäßigen Ausführungsform ist das Drehsteller-Bedienelement 12 als Inkrementalgeber ausgeführt, welcher zur Abgabe von vorzugsweise digital erfassbaren Impulsen eingerichtet ist. Die Steuervorrichtung 1 kann dadurch in zuverlässiger Art und Weise den vom Betätigungsorgan 13 jeweils zurückgelegten Drehwinkel und auch dessen Drehgeschwindigkeit erfassen.

Im Steuerprogramm der Steuervorrichtung 1 ist vorzugsweise eine vom Werkzeugkopf 5 auszuführende Bewegungsbahn definiert oder bedarfsabhängig definierbar. Eine solche Bewegungsbahn umfasst zeitlich bzw. sequentiell aufeinanderfolgende Bearbeitungsphasen und Eilgangphasen des Werkzeugkopfes 5. Um einen praktikablen Betriebsablauf zu gewährleisten, ist vorgesehen, dass das Steuerprogramm einen Evaluierungsmodus umfasst, welcher dazu eingerichtet ist, den Werkzeugkopf 5 am Ende einer Bearbeitungsphase des Werkzeugkopfes 5, sowie am Ende einer Eilgangphase des Werkzeugkopfes 5 automatisch anzuhalten. Nach jedem Halt kann sodann von der Bedienperson die Bearbeitungsphase oder die Eilgangphase einfach eingeleitet werden, indem das Betätigungsorgan 13 um den gewünschten Drehwinkel quasi "aufgedreht" wird. Nachdem das Betätigungsorgan 13 endlos rotierbar ist, ist es dabei in vorteilhafter Art und Weise nicht erforderlich, zuvor eine Rückstellung des Betätigungsorganes 13 vorzunehmen. Jede Ruhestellung kann fortan als Start- bzw. Ausgangsstellung zur Initiierung einer neuen Bewegung mit einer neu definierten Bewegungsgeschwindigkeit des Werkzeugkopfes 5 herangezogen werden.

In diesem Zusammenhang kann das Steuerprogramm dazu eingerichtet sein, den Geschwindigkeitswert für den Werkzeugkopf 5 am Ende der Bearbeitungsphase und am Ende der Eilgangphase auf Null zu setzen. Zweckmäßig ist dabei, wenn dieser Evaluierungsmodus durch eine Bedienperson selektiv ein- und ausschaltbar ist.

Das Steuerprogramm der Steuervorrichtung 1 kann auch zur Bereitstellung eines von einer Bedienperson aktivierbaren Handbetriebes eingerichtet sein. In diesem Handbetrieb ist das Drehsteller-Bedienelement 12 zur Positionierung des Werkzeugkopfes 5 vorgesehen. Das heißt, dass hierbei keine Geschwindigkeitseinstellung erfolgt, sondern eine Positionsvorgabe umgesetzt ist. Dadurch wird die Funktionalität bzw. die Multifunktionalität des Drehsteller-Bedienelementes 12 weiter gesteigert. Im Zuge einer solchen Positionsvorgabe erfolgt eine Bewegung des Werkzeugkopfes 5 nur so lange, solange eine Drehbetätigung des Drehsteller-Bedienelementes 12 ausgeführt wird. Demnach ist das Drehsteller-Bedienelement 12 im Zuge des Handbetriebes dazu eingerichtet, eine Bewegung des Werkzeugkopfes 5 nur so lange einzuleiten, solange eine Drehbetätigung des Betätigungsorganes 13 des Drehsteller-Bedienelementes 12 vorliegt.

Das Drehsteller-Bedienelement 12 bzw. dessen Betätigungsorgan 13 ist zweckmäßigerweise positionsstabil ausgeführt. Demzufolge muss es von einer Bedienperson in der jeweils gewünschten Drehwinkelstellung nicht gehalten werden. Wenn also das Drehsteller-Bedienelement 12 bzw. dessen Betätigungsorgan 13 von einer Bedienperson einmal auf eine bestimmte Drehwinkelposition gebracht wurde, wie z.B. 80%, dann verbleibt es in dieser Stellung bzw.

Drehwinkelposition. Insbesondere verbleibt es solange, bis eine erneute bzw. nachfolgende Drehbetätigung ausgeführt wird.

Durch die Verwendung des angegebenen Drehsteller-Bedienelementes 12 können sowohl die Vorschubgeschwindigkeit als auch die Eilganggeschwindigkeit mit demselben Bedienelement 11 eingestellt bzw. bedarfsgerecht justiert werden. Insbesondere ist das entsprechende Drehsteller-Bedienelement 12 dazu eingerichtet, bei jedem Wechsel zwischen Bearbeitungsphase und Eilgangphase des Werkzeugkopfes 5 eine Bewegung des Werkzeugkopfes 5 nach dessen Stillstand wieder einzuleiten und die Geschwindigkeit des Werkzeugkopfes neu zu definieren. Hierzu dreht die Bedienperson das Betätigungsorgan 13 um den entsprechenden Drehwinkel in jene Richtung, die einen Geschwindigkeitsanstieg bewirkt. Beispielsgemäß kann dies durch eine Rechtsdrehung erfolgen, welche in Fig. 2 durch einen Plus-Pfeil veranschaulicht ist.

Entsprechend einer zweckmäßigen Ausführungsform kann das Betätigungsorgan 13 des Drehsteller-Bedienelementes 12 mit einem gesteuert veränderlichen Drehwiderstand-Generierungsmittel 14 in mechanischer Wechselwirkung bzw. Bewegungskopplung stehen. Das Drehwiderstand-Generierungsmittel 14 ist dabei von der Steuervorrichtung 1 ansteuerbar, um variable bzw. zustandsabhängig veränderliche Drehwiderstände gegenüber dem Betätigungsorgan 13 aufzubauen.

Entsprechend einer zweckmäßigen Maßnahme kann dabei vorgesehen sein, dass die Steuervorrichtung 1 und das Drehwiderstand-Generierungsmittel 14 den Drehwiderstand des Betätigungsorganes 13 in Verbindung mit einer manuellen Vorgabe von hohen oder höher werdenden Bewegungsgeschwindigkeiten proportional bzw. korrespondierend erhöhen. Dadurch wird der Bedienperson eine haptische Signalisierung zur Verfügung gestellt, durch welche die Bedienperson erkennen kann, ob die Bewegungsgeschwindigkeit des Werkzeugkopfes 5 relativ niedrig oder vergleichsweise hoch ist.

Die Steuervorrichtung 1 und das Drehwiderstand-Generierungsmittel 14 können auch dazu eingerichtet sein, den Drehwiderstand des Betätigungsorganes 13 sprunghaft anzuheben oder die Drehbeweglichkeit des Betätigungsorganes 13 zu blockieren, wenn ein maximal möglicher oder maximal zugelassener Geschwindigkeitswert des Werkzeugkopfes 5 erreicht ist.

Auch dadurch kann die Benutzerfreundlichkeit einer Werkzeugmaschine, welche mit der angegebenen Steuervorrichtung 1 ausgestattet ist, gesteigert werden.

Gemäß einer praktikablen Ausführungsform kann vorgesehen sein, dass die Steuervorrichtung 1 und das Drehwiderstand-Generierungsmittel 14 dazu eingerichtet sind, den Drehwiderstand des Betätigungsorganes 13 stark anzuheben, oder die Drehbeweglichkeit des Betätigungsorganes 13 zu hemmen oder zu blockieren, wenn der Werkzeugkopf 5 eine mechanische oder programmtechnisch definierte Endlage bzw. Endposition erreicht hat. Solche Endlagen bzw. Endpositionen können der Steuervorrichtung 1 selbstverständlich auch durch Sensoren 7 bekannt sein, insbesondere können derartige Maschinen- bzw. Betriebszustände sensorisch erfassbar sein. Dadurch können Fehlbedienungen bzw. Irritationen der Bedienperson hintangehalten werden.

Entsprechend einer zweckmäßigen Ausgestaltung können die Steuervorrichtung 1 und das Drehwiderstand-Generierungsmittel 14 auch dazu eingerichtet sein, den Drehwiderstand des Betätigungsorganes 13 beim Erreichen definierter Zwischenwerte, beispielsweise bei 25%, 50% und 75%, eines Maximalwertes der Bewegungsgeschwindigkeit des Werkzeugkopfes 5 kurzzeitig oder impulsartig zu erhöhen und dadurch einer Bedienperson haptisch zu signalisieren. Auch dadurch wird das taktile Wahrnehmungsvermögen einer Bedienperson genutzt, um die entsprechenden Bedienvorgänge rasch und fehlervermeidend bzw. präzise ausführen zu können.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Steuervorrichtung
- 2: Bedienerschnittstelle
- 3: Schaltelement
- 4: Verfahrtasten
- 5: Werkzeugkopf
- 6: Aktor
- 7: Sensor
- 8: erstes Potentiometer
- 9: zweites Potentiometer
- 10: Auswahltasten
- 11: Bedienelement
- 12: Drehsteller-Bedienelement
- 13: Betätigungsorgan
- 14: Drehwiderstand-Generierungsmittel

## Patentansprüche

1. Steuervorrichtung (1) zum Betreiben einer Werkzeugmaschine, insbesondere einer Fräs- oder Drehmaschine, mit einem motorisch verfahr- und positionierbaren Werkzeugkopf,
- welche Steuervorrichtung (1) zur Abarbeitung eines zumindest teilweise frei programmierbaren Steuerprogrammes eingerichtet ist und die Betriebsabläufe der Werkzeugmaschine bestimmt oder mitbestimmt,
- und welche Steuervorrichtung (1) eine Bedienerschnittstelle (2) zur manuell steuerbaren Beeinflussung der Betriebsabläufe der Werkzeugmaschine umfasst, wobei
- die Bedienerschnittstelle (2) zumindest ein Bedienelement zur manuell steuerbaren Veränderung von Bewegungen des Werkzeugkopfes umfasst,
- wobei ein mehrfunktional ausgeführtes Bedienelement (11) vorgesehen ist, welches in einem ersten Verwendungszustand zur manuellen Vorgabe oder Beeinflussung einer Vorschubgeschwindigkeit im Zuge einer Bearbeitungsphase des Werkzeugkopfes eingerichtet ist, und welches mehrfunktional ausgeführte Bedienelement (11) in einem zweiten Verwendungszustand zur manuellen Vorgabe oder Beeinflussung einer Eilganggeschwindigkeit im Zuge einer Eilgangphase des Werkzeugkopfes eingerichtet ist, und dass
- das mehrfunktional ausgeführte Bedienelement (11) als Drehsteller-Bedienelement (12) mit einem endlos verdrehbaren Betätigungsorgan (13) ausgeführt ist,
- wobei in dem Steuerprogramm eine vom Werkzeugkopf auszuführende Bewegungsbahn definiert ist, welche Bewegungsbahn zeitlich aufeinanderfolgende Bearbeitungsphasen und Eilgangphasen des Werkzeugkopfes umfasst,
- **dadurch gekennzeichnet, dass** Wechsel zwischen dem ersten und dem zweiten Verwendungszustand des Drehsteller-Bedienelementes (12) durch das Steuerprogramm automatisch ausgelöst werden

2. Steuervorrichtung nach Anspruch 1, **dadurch gekennzeichnet, dass** das Drehsteller-Bedienelement (12) als Inkrementalgeber ausgeführt ist, welcher zur Abgabe von vorzugsweise digital erfassbaren Impulsen eingerichtet ist.

3. Steuervorrichtung nach Anspruch 1 oder 2, **dadurch gekennzeichnet, dass** das Steuerprogramm einen Evaluierungsmodus umfasst, welcher dazu eingerichtet ist, den Werkzeugkopf am Ende einer Bearbeitungsphase sowie am Ende einer Eilgangphase automatisch anzuhalten.

4. Steuervorrichtung nach Anspruch 3, **dadurch gekennzeichnet, dass** der Evaluierungsmodus durch eine Bedienperson selektiv ein- und ausschaltbar ist.

5. Steuervorrichtung nach Anspruch 3, **dadurch gekennzeichnet, dass** das Steuerprogramm dazu eingerichtet ist, den Geschwindigkeitswert für den Werkzeugkopf am Ende der Bearbeitungsphase und am Ende der Eilgangphase auf Null zu setzen.

6. Steuervorrichtung nach einem der vorhergehenden Ansprüche, **dadurch gekennzeichnet, dass** das Drehsteller-Bedienelement (12) dazu eingerichtet ist, bei jedem Wechsel zwischen Bearbeitungsphase und Eilgangphase - und umgekehrt - eine Bewegung des Werkzeugkopfes wieder einzuleiten und die Geschwindigkeit des Werkzeugkopfes neu zu definieren.

7. Steuervorrichtung nach einem der vorhergehenden Ansprüche, **dadurch gekennzeichnet, dass** das Steuerprogramm zur Bereitstellung eines von einer Bedienperson aktivierbaren Handbetriebes eingerichtet ist, in welchem Handbetrieb das Drehsteller-Bedienelement (12) zur Positionierung des Werkzeugkopfes vorgesehen ist.

8. Steuervorrichtung nach Anspruch 7, **dadurch gekennzeichnet, dass** das Drehsteller-Bedienelement (12) im Zuge des Handbetriebes dazu eingerichtet ist, eine Bewegung des Werkzeugkopfes nur solange einzuleiten, solange eine Drehbetätigung des Betätigungsorganes (13) des Drehsteller-Bedienelementes (12) vorliegt.

9. Steuervorrichtung nach einem der vorhergehenden Ansprüche, **dadurch gekennzeichnet, dass** das Betätigungsorgan (13) mit einem gesteuert veränderlichen Drehwiderstand-Generierungsmittel (14) in mechanischer Wechselwirkung steht, und dass das Drehwiderstand-Generierungsmittel (14) von der Steuervorrichtung (1) ansteuerbar ist.

10. Steuervorrichtung nach Anspruch 9, **dadurch gekennzeichnet, dass** die Steuervorrichtung (1) und das Drehwiderstand-Generierungsmittel (14) dazu eingerichtet sind, den Drehwiderstand des Betätigungsorganes (13) in Verbindung mit einer Vorgabe von hohen oder höher werdenden Bewegungsgeschwindigkeiten zu erhöhen.

11. Steuervorrichtung nach Anspruch 9, **dadurch gekennzeichnet, dass** die Steuervorrichtung (1) und das Drehwiderstand-Generierungsmittel (14) dazu eingerichtet sind, den Drehwiderstand des Betätigungsorganes (13) sprunghaft anzuheben oder die Drehbeweglichkeit des Betätigungsorganes (13) zu blockieren, wenn ein maximal möglicher oder maximal zugelassener Geschwindigkeitswert des Werkzeugkopfes erreicht ist.

12. Steuervorrichtung nach Anspruch 9, **dadurch gekennzeichnet, dass** das die Steuervorrichtung (1) und das Drehwiderstand-Generierungsmittel (14) dazu eingerichtet sind, den Drehwiderstand des Betätigungsorganes (13) stark anzuheben, oder die Drehbeweglichkeit des Betätigungsorganes (13) zu hemmen oder zu blockieren, wenn der Werkzeugkopf eine mechanisch oder programmtechnisch definierte Endlage oder Endposition erreicht.

13. Steuervorrichtung nach Anspruch 9, **dadurch gekennzeichnet, dass** die Steuervorrichtung (1) und das Drehwiderstand-Generierungsmittel (14) dazu eingerichtet sind, den Drehwiderstand des Betätigungsorganes (13) beim Erreichen definierter Zwischenwerte, beispielsweise bei 25%, 50% und 75%, eines Maximalwertes der Bewegungsgeschwindigkeit des Werkzeugkopfes kurzzeitig oder impulsartig zu erhöhen und dadurch einer Bedienperson haptisch zu signalisieren.

14. Werkzeugmaschine, insbesondere Fräs- oder Drehmaschine, mit einem motorisch verfahr- und positionierbaren Werkzeugkopf, **dadurch gekennzeichnet, dass** sie eine Steuervorrichtung (1) nach einem oder mehreren der vorhergehenden Ansprüche umfasst.

## Claims

1. A control device (1) for operating a machine tool, in particular a milling machine or lathe, having a tool head that can be displaced and positioned by a motor,
- which control device (1)is set up to execute an at least partially freely programmable control program, and determines or co-determines the operational sequences of the machine tool,
- and which control device (1) comprises a user interface (2) for manually controllable influencing of the operational sequences of the machine tool, wherein
- the user interface (2) comprises at least one operating element for manually controllable changing of movements of the tool head,
- wherein a multi-functionally designed operating element (11) is provided, which is set up, in a first usage state, to manually set or influence a feed speed during the course of a processing phase of the tool head, and which multi-functionally designed operating element (11) is set up, in a second usage state, to manually set or influence a rapid traverse during the course of a rapid-traverse phase of the tool head, and that
- the multi-functionally designed operating element (11) is designed as a rotary adjuster operating element (12) having an infinitely rotatable actuation member (13),
- wherein a movement path to be performed by the tool head is defined in the control program, which movement path comprises processing phases and rapid-traverse phases of the tool head,
- **characterized in that** change-overs between the first and the second usage state of the rotary adjuster operating element (12) are caused by the control program automatically.

2. The control device according to claim 1, **characterized in that** the rotary adjuster operating element (12) is designed as an incremental transducer, which is set up to issue pulses that can preferably be captured digitally.

3. The control device according to claim 1 or 2, **characterized in that** the control program comprises an evaluation mode that is set up to automatically stop the tool head at the end of a processing phase and at the end of a rapid-traverse phase.

4. The control device according to claim 3, **characterized in that** the evaluation mode can be selectively turned on and off by an operator.

5. The control device according to claim 3, **characterized in that** the control program is set up to set the speed value for the tool head to zero at the end of the processing phase and at the end of the rapid-traverse phase.

6. The control device according to one of the preceding claims, **characterized in that** the rotary adjuster operating element (12) is set up to re-initiate a movement of the tool head during every change-over between processing phase and rapid-traverse phase - and vice versa - and to redefine the speed of the tool head.

7. The control device according to one of the preceding claims, **characterized in that** the control program is set up to supply a manual operation that can be activated by an operator, in which manual operation the rotary adjuster operating element (12) is provided for positioning of the tool head.

8. The control device according to claim 7, **characterized in that** the rotary adjuster operating element (12) is set up, during the course of manual operation, to initiate a movement of the tool head only as long as rotary actuation of the actuation member (13) of the rotary adjuster operating element (12) is present.

9. The control device according to one of the preceding claims, **characterized in that** the actuation member (13) mechanically interacts with a rotary resistance-generating means (14) that can be changed in controlled manner, and that the rotary resistance-generating means (14) can be triggered by the control device (1).

10. The control device according to claim 9, **characterized in that** the control device (1) and the rotary resistance-generating means (14) are set up to increase the rotary resistance of the actuation member (13) in connection with a specification of high movement speeds or movement speeds that become higher.

11. The control device according to claim 9, **characterized in that** the control device (1) and the rotary resistance-generating means (14) are set up to abruptly increase the rotary resistance of the actuation member (13) or to block the rotatability of the actuation member (13) when a maximally possible or maximally permissible speed value of the tool head has been reached.

12. The control device according to claim 9, **characterized in that** the control device (1) and the rotary resistance-generating means (14) are set up to greatly increase the rotary resistance of the actuation member (13), or to inhibit or block the rotatability of the actuation member (13) when the tool head reaches a mechanically defined end location or end position or one defined in terms of program technology.

13. The control device according to claim 9, **characterized in that** the control device (1) and the rotary resistance-generating means (14) are set up to briefly increase the rotary resistance of the activation part (13), or to increase it in pulse-like manner, when defined intermediate values, for example 25 %, 50 %, and 75 % of a maximum value of the movement speed of the tool head are reached and thereby to signal this haptically to an operator.

14. A machine tool, in particular a milling machine or lathe, having a tool head that can be displaced and positioned by a motor, **characterized in that** it comprises a control device (1) according to one or more of the preceding claims.

## Revendications

1. Dispositif de commande (1) pour le contrôle d'une machine-outil, plus particulièrement d'une fraiseuse ou d'un tour, avec une tête d'outil mobile et positionnable par moteur,
- ce dispositif de commande (1) étant conçu pour l'exécution d'un programme de commande programmable au moins partiellement librement et déterminant ou participant à la détermination des processus de fonctionnement,
- et ce dispositif de commande (1) comprenant une interface de commande (2) pour le contrôle manuel des processus de fonctionnement de la machine-outil, dans lequel
- l'interface de commande (2) comprend au moins un élément de commande pour la modification manuelle des déplacements de la tête d'outil,
- dans lequel un élément de commande (11) réalisé de manière multifonctionnelle est prévu, qui, dans un premier état d'utilisation, est conçu pour la détermination ou le contrôle manuel d'une vitesse d'avance au cours d'une phase d'usinage de la tête d'outil et cet élément de commande (11) réalisé de manière multifonctionnelle étant conçu, dans un deuxième état d'utilisation, pour la détermination ou le contrôle manuel d'une vitesse rapide au cours d'une phase à vitesse rapide de la tête d'outil et
- l'élément de commande (11) réalisé de manière multifonctionnelle est réalisé comme un élément de commande à actionneur rotatif (12) avec un organe d'actionnement (13) rotatif sans fin,
- dans lequel, dans le programme de commande, une trajectoire à parcourir par la tête d'outil est définie, cette trajectoire comprenant des phases d'usinage et des phases à vitesse rapide de la tête d'outil, qui se succèdent dans le temps,
- **caractérisé en ce que** le changement entre le premier et le deuxième état d'utilisation de l'élément de commande à actionneur rotatif (12) est déclenché automatiquement par le programme de commande.

2. Dispositif de commande selon la revendication 1, **caractérisé en ce que** l'élément de commande à actionneur rotatif (12) est réalisé comme un codeur incrémental qui est conçu pour l'émission d'impulsions détectables de préférence de manière numérique.

3. Dispositif de commande selon la revendication 1 ou 2, **caractérisé en ce que** le programme de commande comprend un mode d'évaluation qui est conçu pour arrêter automatiquement la tête d'outil à la fin d'une phase d'usinage ainsi qu'à la fin d'une phase à vitesse rapide.

4. Dispositif de commande selon la revendication 3, **caractérisé en ce que** le mode d'évaluation peut être activé et désactivé de manière sélective par un opérateur.

5. Dispositif de commande selon la revendication 3, **caractérisé en ce que** le programme de commande est conçu pour régler à zéro la valeur de vitesse pour la tête d'outil à la fin de la phase d'usinage et à la fin de la phase à vitesse rapide.

6. Dispositif de commande selon l'une des revendications précédentes, **caractérisé en ce que** l'élément de commande à actionneur rotatif (12) est conçu pour initier à nouveau un déplacement de la tête d'outil et pour redéfinir la vitesse de la tête d'outil à chaque passage d'une phase d'usinage à une phase à vitesse rapide, et inversement.

7. Dispositif de commande selon l'une des revendications précédentes, **caractérisé en ce que** le programme de commande est conçu pour la mise à disposition d'un mode manuel pouvant être activé par un opérateur, l'élément de commande à actionneur rotatif (12) étant prévu, dans ce mode manuel, pour le positionnement de la tête d'outil.

8. Dispositif de commande selon la revendication 7, **caractérisé en ce que**, en mode manuel, l'élément de commande à actionneur rotatif (12) est conçu pour initier un déplacement de la tête d'outil uniquement tant qu'il existe un actionnement en rotation de l'organe d'actionnement (13) de l'élément de commande à actionneur rotatif (12).

9. Dispositif de commande selon l'une des revendications précédentes, **caractérisé en ce que** l'organe d'actionnement (13) est en interaction mécanique avec un moyen de génération d'une résistance à la rotation (14) variable de manière contrôlée et **en ce que** le moyen de génération d'une résistance à la rotation (14) peut être contrôlé par le dispositif de commande (1).

10. Dispositif de commande selon la revendication 9, **caractérisé en ce que** le dispositif de commande (1) et le moyen de génération d'une résistance à la rotation (14) sont conçus pour augmenter la résistance à la rotation de l'organe d'actionnement (13) en lien avec une détermination de vitesse de déplacement élevées ou en augmentation.

11. Dispositif de commande selon la revendication 9, **caractérisé en ce que** le dispositif de commande (1) et le moyen de génération d'une résistance à la rotation (14) sont conçus pour augmenter brusquement la résistance à la rotation de l'organe d'actionnement (13) ou pour bloquer la mobilité en rotation de l'organe d'actionnement (13) lorsqu'une valeur de vitesse maximale possible ou maximale admissible de la tête d'outil est atteinte.

12. Dispositif de commande selon la revendication 9, **caractérisé en ce que** le dispositif de commande (1) et le moyen de génération d'une résistance à la rotation (14) sont conçus pour augmenter fortement la résistance à la rotation de l'organe d'actionnement (13) ou pour freiner ou bloquer la mobilité en rotation de l'organe d'actionnement (13) lorsque la tête d'outil atteint une position finale définie mécaniquement ou par un programme.

13. Dispositif de commande selon la revendication 9, **caractérisé en ce que** le dispositif de commande (1) et le moyen de génération d'une résistance à la rotation (14) sont conçus pour augmenter brièvement ou par impulsions la résistance à la rotation de l'organe d'actionnement (13) lorsque des valeurs intermédiaires définies sont atteintes ; par exemple à 25 %, 50 % et 75 % d'une valeur maximale de la vitesse de déplacement de la tête d'outil et pour en informer l'opérateur de manière haptique.

14. Machine-outil, plus particulièrement fraiseuse ou tour, avec une tête d'outil mobile et positionnable à l'aide d'un moteur, **caractérisée en ce qu'**elle comprend un dispositif de commande (1) selon l'une ou plusieurs des revendications précédentes.
